# EUROPEAN PATENT APPLICATION

(11) **EP 4 678 910 A1**
(43) Date of publication of application: **14.01.2026**
(21) Application number: 24382748.2
(22) Date of filing: 12.07.2024
(51) Int. Cl.: F03D 15/00, B22F 5/08, F03D 15/10, F16H 57/08

(54) **WIND TURBINE GEARBOX AND METHOD OF MOUNTING A WIND TURBINE GEARBOX**

(71) Applicant: Siemens Gamesa Renewable Energy Innovation & Technology S.L., 31621 Sarriguren (Navarra) (ES)
(72) Inventor: Villanueva Manrique, Jose, 48005 Bilbao (ES)
(74) Representative: SGRE-Association

(57) **Abstract**

The invention relates to a wind turbine gearbox (7), for transmitting torque from a rotor (4) to a generator (9), comprising a planet carrier (20), at least three planet shafts (34) comprising a fixed side (36) and a free side (37),at least three planet wheels (40) mounted on the planet shafts (34), and a hollow wheel (45) of at least 1.8m in diameter, wherein the planet wheels (40) mesh with the hollow wheel (45). The planet carrier (20) comprises a first part (22) and a second part (23) connected to each other. According to the invention, the fixed side (36) of each planet shaft (34) is fixed to the first part (22) of the planet carrier (20) by a rigid connection.

## Description

The present invention relates to a wind turbine gearbox for transmitting torque from a rotor to a generator. The present invention further relates to a wind turbine comprising said wind turbine gearbox. The present invention further relates to a method of mounting a wind turbine gearbox.

Wind turbines are increasingly used for the generation of electrical energy. A wind turbine typically comprises a tower and a nacelle mounted on the tower, to which a rotor is attached. The rotor is coupled to a generator. A plurality of rotor blades extends from the rotor. The blades are oriented in such a way that wind passing over the blades turns the rotor and rotates the shaft, thereby driving the generator to generate electricity.

Wind turbines are in continuous development due to advancements in technology and energy harvesting. Hence, new-generation wind turbines have increased in size compared to older ones. In the majority of modern large wind turbines, a gearbox is arranged between the wind rotor and the generator to reduce the large torque on the rotor side by increasing the speed on the generator side. The wind turbine gearbox is one of the components which has greatly increased in size as the increased rotor torque and rotor power must be transmitted by the gearbox.

A larger gearbox significantly increases the weight of the wind turbine nacelle, creating a need for larger cranes being able to lift the nacelle on the tower top. In addition, a larger gearbox increases the size of the nacelle, which dimensions are limited by the need of transport on public roads with severe limits on width and heights.

Usually, the torque in wind turbine gearboxes is transmitted from the rotor shaft via an input shaft connection to a planet carrier of a first gearbox planet stage. To the planet carrier, planet shafts with rotatably mounted planet wheels are attached. A detachable connection between the planet carrier and the planet shafts allows the demounting of the gearbox planet stage for maintenance purposes, e.g., for exchanging the planet bearings.

The detachable connection between the planet carrier and the planet shafts introduces unwanted elasticity in the planet carrier. Therefor a big part of the rotor torque is transmitted from the rotor side of the planet carrier to the generator side of the planet carrier via rigid columns placed between the planet wheels and being an integral part of the planet carrier.

All this results in a complex geometry and a weight of several tons of the planet carrier. Due to the complex geometry and the significant weight, the casting of the planet carrier is a complicated and expensive process, needing complicated molds of multiple parts.

It is therefore an object of the invention to provide an improved design of a wind turbine gearbox avoiding the disadvantages of the state of the art. It is in particular an object of the invention to increase the strength of a planet carrier by avoiding critical stress concentration zones for allowing higher torque transmission in a given gearbox size. It is a further object to reduce the size and the weight of a planet stage of a wind turbine gearbox and to improve the maintainability of a wind turbine gearbox.

This is achieved by a wind turbine gearbox according to claim 1, a wind turbine according to claim 12 and a method of mounting a wind turbine gearbox according to claim 13.

According to the invention, a wind turbine gearbox for transmitting torque from a rotor to a generator comprises a planet carrier, at least three planet shafts comprising a fixed side and a free side, at least three planet wheels mounted on the planet shafts, and a hollow wheel of at least 1.8m in diameter, wherein the planet wheels mesh with the hollow wheel.

The planet shafts are housed in the planet carrier and the planet wheels are placed inside the hollow wheel.

Usually, the planet wheels are mounted on the planet shafts using planet bearings for reducing the friction between the planet wheels and the planet shafts.

Gearboxes with more than three planet shafts and planet wheels are commonly used in wind turbines. Using five to eight planets will distribute the gearbox torque on more teeth engaged in the transmission, allowing advantageously to reduce the overall diameter of the gearbox. Nevertheless, there is always the risk with more than three planet wheels that the load is not equally distributed on all planet wheels. Following company's internal investigations, using the invention together with a large hollow wheel of at least 1.8m in diameter provides enough elasticity in the gearbox structure for compensating eventual manufacturing tolerances for assuring an equal load share between the planet wheels within the inventive gearbox.

According to the invention, the planet carrier comprises a first part and a second part connected to each other, wherein one of the two parts is on the rotor side of the planet carrier and the other part is on the generator side of the planet carrier. The fixed side of each planet shaft is fixed to the first part of the planet carrier by a rigid connection.

Rigid connection defines that the connection is an integral one-part connection which can only be demounted by destroying the connection. A rigid connection can be achieved with permanent joining methods such as welding, which permanently join the surfaces of individual components together to create a single component which cannot be separated into the original individual components without considerable damage. A rigid connection can also be achieved during the production of the component, like forging in one piece or casting in one piece. In this case, the casting mold comprises the components which are to be connected.

By using a rigid connection between the planet shafts and the planet carrier, a weak spot in the design of conventional planet carriers is avoided. The total torque load of the input shaft needs to be transmitted from the input shaft via an input shaft connection to the planet carrier and further via the planet shafts to the planet wheels. Hereby, the connection between the planet shafts and the planet carrier is particularly critical due to its relatively compact dimensions, the planet shafts having usually a relatively small diameter. This leads to nonlinear behavior in the deflection of the planet shafts with the risk of permanent dislocation and deflection of the planet shafts, increasing the risk of unequal load distribution over the width of the teeth of the planet wheel in contact with the hollow wheel or the sun gear. Additionally, the highly loaded connection of the prior art involves the risk of micro fretting, leading to corrosion under the difficult environmental conditions wind turbines are exposed to. A corroded planet shaft - planet carrier connection leads to dramatically increased maintenance efforts if during the 20-to-30-year lifetime the gearbox must be disassembled, e.g., for exchanging the planet bearings. All these disadvantages are mitigated by providing a rigid connection between the planet shafts and the planet carrier.

For allowing the assembly of the planet stage, the rigid connection between the planet shafts and the planet carrier is advantageously combined with a two parted planet carrier, allowing to place the planet wheels in between the rotor side part and the generator side part of the planet carrier.

Thus, the combination of these features of the invention allows for a light weight and compact design of the wind turbine gearbox avoiding the disadvantages of the prior art by shifting the highly loaded weak connection spot between the planet shafts and the planet carrier to a connection area between the two parts of the planet carrier which is less loaded and allows due to the geometric dimensions an easier load transfer through the connection.

According to a preferred embodiment of the invention the rigid connection is a forged connection or a casted connection or a welded connection.

By forging the connection in one piece, maximum strength of the connection can advantageously be achieved.

Alternatively, casting the connection in one piece provides sufficient strength with a much easier production process, especially if a larger number of parts is needed for a serial production. In this way, an economic production can advantageously be achieved.

In a preferred embodiment of the invention, the casted connection includes casting the connection to a preproduced planet shaft. Casted parts including preproduced parts which are integrated during the casting process are generally known in the prior art, allowing to integrate structures of different, e.g., higher strength materials into a casted part.

Advantageously, the highly loaded planet shafts are preproduced in a higher strength steel and are integrated in the mold of the first part of the planet carrier. During the casting process, a rigid connection between the first part of the planed carrier and the preproduced planet shafts will be established, allowing to use the expensive high strength material only in the highly loaded spots. Thus, the overall material cost will advantageously be reduced.

Alternatively, the rigid connection is a welded connection, leading advantageously to the lowest production costs, e.g., if only a small number of parts is needed, and the production of an expensive mold should be avoided.

In a preferred embodiment, the welded connection comprises a heat treatment after the welding process, leading to a higher strength in the welding region and advantageously allowing to compensate for any distortion which might be caused by the welding process.

According to a preferred embodiment of the invention the free side of the planet shafts is connected to the second part of the planet carrier, so that the first part and the second part of the planet carrier are connected by the planet shafts. Connecting the free side of the planet shafts to the second part of the planet carrier advantageously results in a very rigid fixation of the planet shafts, avoiding undesired non linear deflections of the planet shafts. Thus, the deflections are better predictable and advantageously require less microgeometrical corrections in the gear teeth to ensure a good load distribution over the width of the planet wheel teeth. Connecting the planet shafts on both sides with the planet carrier allows for much better alignment of the planet wheels with the hollow wheel compared to one sided connections of the planet shafts known in some designs in the state of the art.

According to a preferred embodiment of the invention the connection between the free side of the planet shafts and the second part of the planet carrier is a detachable connection, in particular a bolted connection, a clamped connection or a press fit. A detachable connection allows advantageously easy disassembling of the planet carrier, e.g., in cases when the planet bearings need a replacement during the lifetime of the wind turbine.

According to a preferred embodiment of the invention the connection between the planet shafts and the second part of the planet carrier comprises shaft connection means, in particular bolts and/or rods. Connecting the planet shafts with connection means allows for simple mounting and demounting of the gearbox parts with standard tools. Especially under the difficult service and maintenance conditions of wind turbines which will be erected all over the world, the assembly with standardized connection means is highly advantageous compared to alternatives like press fit connections which are very difficult to demount without expensive special equipment which is not available in all workshops.

According to a further preferred embodiment of the invention the second part of the planet carrier comprises a planet shaft interface. Providing an interface for the planet shafts advantageously allows for simple assembly of the parts in defined positions, thus avoiding tolerances due to imperfect mounting.

Preferably the planet shaft interface is designed with a self-centering geometry leading to an exactly defined position when the parts are fully assembled.

According to a preferred embodiment of the invention the planet shaft interface is configured to receive bearing pretension means. Allowing the shaft interface to receive bearing pretension means results in a very simple solution allowing for a predefined pretension of the planet bearings when mounting the planet carrier. A predefined pretension of the planet bearings is of great importance for ensuring the expected lifetime of the planet bearings.

In a preferred embodiment, the planet bearings are of the type of tapered roller bearings. Tapered roller bearings are advantageously able to transfer high loads in small dimensions and achieve a long lifetime if the bearing pretension is according to a predefined level.

According to a preferred embodiment of the invention the first part and the second part of the planet carrier are connected by at least one column. Connecting the two parts of the planet carrier by additional columns increases the torsional stiffness of the planet carrier and reduces advantageously the loading in the connection between the free ends of the planet shafts and the second part of the planet carrier, thus allowing for higher torque transmission within the same dimensions of the gearbox.

According to a preferred embodiment of the invention the planet shafts and the column are fixed to the first part of the planet carrier. Fixing additionally to the planet shafts the column to the first part of the planet carrier simplifies the production process of the planet carrier parts. The first part is anyway a complex part as the planet shafts are already fixed to it, so the column fixed to it in addition does not significantly change the complexity. Advantageously the second part of the planet carrier is in this embodiment mostly a plate shaped part which allows for a simple and economic production process.

According to a preferred embodiment of the invention the connection between the column and the second part of the planet carrier comprises column connection means, in particular bolts and/or rods. Connecting the column with connection means allows for simple mounting and demounting of the gearbox parts with standard tools. Especially under the difficult service and maintenance conditions of wind turbines which will be erected all over the world, the assembly with standardized connection means is highly advantageous compared to alternatives like press fit connections which are very difficult to demount without expensive special equipment which is not available in all workshops.

According to a preferred embodiment of the invention the second part of the planet carrier comprises at least one column interface. Providing an interface for the column advantageously allows for simple assembly of the parts in defined positions, thus avoiding tolerances due to imperfect mounting.

Preferably the column interface is designed with a self-centering geometry leading to an exactly defined position when the parts are fully assembled.

According to a preferred embodiment of the invention the planet shaft interface and the column interface have the same base shape, in particular a circular base shape. Providing the shaft interface and the column interface with the same base shape advantageously allows for a simple and economic manufacturing process, as all interfaces can be machined with the same tools and the same process.

In a preferred embodiment, a plurality of columns and column interfaces is provided, in particular the same number of columns and column interfaces as shaft interfaces. This symmetric geometry leads advantageously to a compact design with maximum load transfer capacities between the two parts of the planet carrier.

In a preferred embodiment all interfaces are not only provided with the same base shape but with the same geometry. Advantageously, this results in great simplicity for mounting the second part of the planet carrier to the planet shafts and columns, as the parts are fitting together in all possible mounting positions, as there is no need to connect shaft interfaces to planet shafts and column interfaces to columns.

According to a preferred embodiment of the invention the first part of the planet carrier is on the rotor side of the planet carrier and/or the second part of the planet carrier is on the generator side of the planet carrier. Arranging the first part of the planet carrier on the rotor side of the planet carrier advantageously results in the shortest load path from the input shaft to the planet wheels. The torque from the input shaft will be directly transmitted from the input shaft over the rigid connection between the first part of the planet carrier to the planet shafts and from there on to the planet wheels.

In the same way, arranging the second part of the planet carrier on the generator side results in a low load level for the connection between the two parts of the planet carrier, as the mayor part of the torque load is already discharged via the planet wheels and only the lower reaction forces of the free end of the planet shafts have to be transmitted via the connection of the two parts of the planet carrier.

Following company's internal calculations, the inventive design of the planet carrier allows for weight reductions of up to 25% in relation to the designs known in the state of the art. The largest part of the weight saving is realized by combining the features of designing a two parted planet carrier wherein the free side of the planet shafts are fixed to the first part of the planet carrier by a rigid connection and the free side of the planet shafts are connected with the second part of the planet carrier and the first part is on the rotor side and the second part is on the generator side of the planet carrier.

Another aspect of the invention relates to a wind turbine comprising a wind turbine gearbox according to the invention.

Another aspect of the invention relates to a method of mounting a wind turbine gearbox, comprising the steps of providing a first part of a planet carrier comprising planet shafts rigidly connected to the first part of the planet carrier, mounting a planet wheel on each planet shaft, connecting the first part of the planet carrier with a second part of the planet carrier, and mounting the planet carrier into a hollow wheel of at least 1.8m in diameter so that the planet wheel meshes with the hollow wheel.

In particular, a wind turbine gearbox, for transmitting torque from a rotor to a generator, comprises a planet carrier, at least three planet shafts comprising a fixed side and a free side, at least three planet wheels mounted on the planet shafts, and a hollow wheel of at least 1.8m in diameter, wherein the planet wheels mesh with the hollow wheel.

The planet shafts are housed in the planet carrier and the planet wheels are placed inside the hollow wheel.

Usually, the planet wheels are mounted on the planet shafts using planet bearings for reducing the friction between the planet wheels and the planet shafts.

Gearboxes with more than three planet shafts and planet wheels are commonly used in wind turbines. Using five to eight planets will distribute the gearbox torque on more teeth engaged in the transmission, allowing advantageously to reduce the overall diameter of the gearbox. Nevertheless, there is always the risk with more than three planet wheels, that the load is not equally shared on all planet wheels. Following company internal investigations, using the invention together with a large hollow wheel of at least 1.8m in diameter provides enough elasticity in the gearbox structure for compensating eventual manufacturing tolerances for assuring an equal load share between the planet wheels within the inventive gearbox.

According to the invention, the planet carrier comprises a first part and a second part connected to each other, wherein one of the two parts is on the rotor side of the planet carrier and the other part is on the generator side of the planet carrier. The fixed side of each planet shaft is fixed to the first part of the planet carrier by a rigid connection.

Rigid connection defines that the connection is an integral one-part connection which can only be demounted by destroying the connection.

By using a rigid connection between the planet shaft and the planet carrier, a weak spot in the design of conventional planet carriers is avoided.

For allowing the assembly of the planet stage, the rigid connection between the planet shafts and the planet carrier is advantageously combined with a two parted planet carrier, allowing to place the planet wheels in between the rotor side part and the generator side part of the planet carrier.

Thus, the combination of these features of the invention allows for a light weight and compact design of the wind turbine gearbox avoiding the disadvantages of the prior art by shifting the highly loaded weak connection spot between the planet shafts and the planet carrier to a connection area between the two parts of the planet carrier which is less loaded and allows due to the geometric dimensions an easier load transfer through the connection.

Usually, the planet carriers of wind turbine gearboxes are one-part carriers. The planet wheels are put into place and the planet shafts are pushed through the planet carrier and the planet wheels to fix all three parts together.

Providing a first part of a planet carrier comprising planet shafts rigidly connected to the first part of the planet carrier eliminates, as discussed above for the wind turbine gearbox, a weak connection spot in the gearbox. The described advantages apply respectively to the method claims.

Connecting the first part of the planet carrier with a second part of the planet carrier provides additional stiffness to the planet carrier and the planet shafts, thus ensuring good alignment of the planet wheels with the hollow wheel.

According to another preferred embodiment of the invention, the step of providing the first part of the planet carrier comprises casting the first part of the planet carrier and the planet shafts in one piece or forging the first part of the planet carrier and the planet shafts in one piece, or welding the first part of the planet carrier and the planet shafts together so that they form one piece.

As stated above, all three claimed methods of producing the first part of the planet carrier and the planet shafts in one piece offer specific advantages for different applications, mostly depending on the number of parts needed in the serial production.

According to another preferred embodiment of the invention, the step mounting planet wheels on the planet shafts comprises mounting planet bearings on the planet shaft and wherein the step connecting the first part of the planet carrier with the second part of the planet carrier includes mounting bearing pretension means to pretense the planet bearings.

As stated above, mounting pretension means to pretense the planet bearings is important to allow for the maximum life time of the planet bearings by advantageously adjusting the bearing pretension with simple and reliable means.

In order to facilitate the understanding of the characteristics of the invention and being an integral part of this specification, some drawing sheets are attached on which figures, with an illustrative but not limiting character, the following is represented:
Figure 1 shows a wind turbine with a wind turbine gear box for transmitting torque from a wind rotor to a generator according to the invention.
Figure 2 shows a planet stage of a wind turbine gearbox as known in the prior art.
Figure 3 shows a planet carrier according to a first embodiment of the invention from a first side.
Figure 4 shows the planet carrier of Figure 3 from a second side.
Figure 5 shows an embodiment of a first part of planet carrier in a perspective view.
Figure 6 shows the embodiment of Figure 5 in a side view.
Figure 7 shows an embodiment of a second part of planet carrier following the invention in a perspective view.
Figure 8 shows the embodiment of Figure 7 in a top view.
Figure 9 shows another embodiment of a second part of planet carrier in a perspective view.
Figure 10 shows another embodiment of a first part of planet carrier in a perspective view.
Figure 11 shows another embodiment of a planet stage in a sectional view.

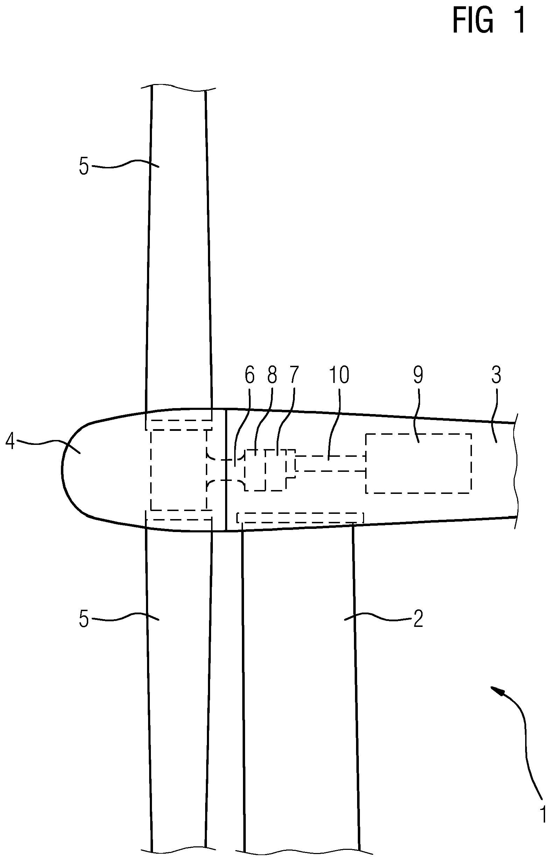

Figure 1 shows a wind turbine 1 with a tower 2 and a nacelle 3. Rotatably attached to the nacelle 3 is a wind rotor 4 with rotor blades 5. The torque generated by the rotor 4 is transmitted via the rotor shaft 6 to the gearbox 7 comprising a planet stage 8. In the shown embodiment, the rotor shaft 6 is the input shaft for the planet stage 8. In other embodiments, the input shaft 19 for the planet stage 8 might be a different shaft, e.g., an intermediate shaft. The output torque of the gearbox 7 is transmitted via the high-speed shaft 10 to the generator 9.

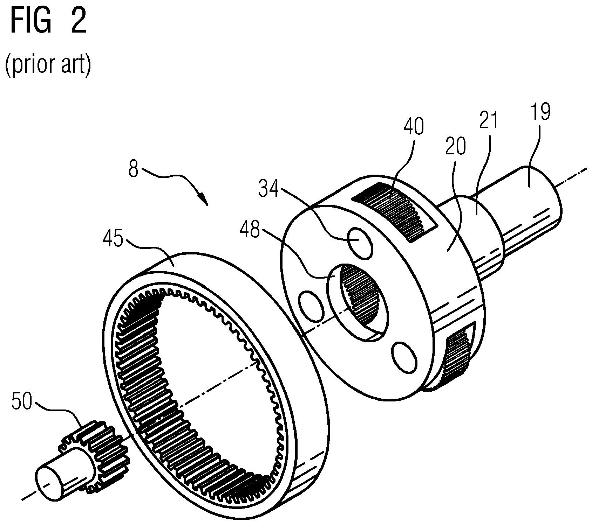

Figure 2 shows a planet stage 8 as known in the prior art. An input shaft 19 transmits torque to a planet carrier 20 via an input shaft connection 21. Attached to the planet carrier 20 are planet shafts 34, on which planet wheels 40 are rotatably mounted. In the shown embodiment, three planet shafts 34 and three planet wheels 40 are connected to the planet carrier 20. For operation, the hollow wheel 45 will be arranged around the planet carrier 20 and the planets 40 are meshing with the hollow wheel 45. The sun wheel 50 will be introduced in the center of the planet carrier 20 in the sun wheel opening 48 so that the planet wheels 40 are meshing with the sun wheel 50. In some embodiments, the sun wheel 50 is connected to the high-speed shaft 10, in other embodiments, the sun wheel 50 is connected to a different shaft, e.g., an intermediate shaft.

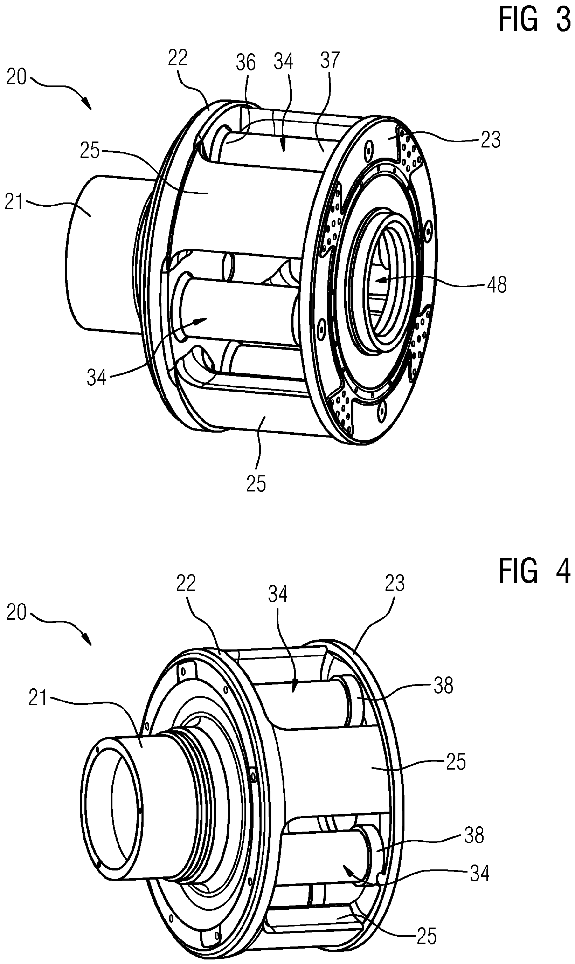

Figure 3 shows a preferred embodiment of the planet carrier 20 comprising a first part 22 and a second part 23. The first part 22 is connected to the input shaft connection 21. In some embodiments, this connection is a rigid connection, in other embodiments, the connection is flexible or demountable.

According to the invention, a fixed side 36 of the planet shafts 34 is fixed to the first part 22 of the planet carrier 20 by a rigid connection.

Free sides 37 of the planet shafts 34 are connected to the second part 23 of the planet carrier 20, so that the first part 22 and the second part 23 of the planet carrier 20 are connected by the planet shafts 34.

In addition to the planet shafts 34, the two parts 22, 23 of the planet carrier 20 are connected by columns 25. The columns 25 are fixed to the first part of the planet carrier 22. In the shown preferred embodiment, the columns 25 are fixed to the first part of the planet carrier 22 by a rigid connection.

In the shown preferred embodiment, four planet shafts 34 and four columns 25 are fixed to the first part 22 of the planet carrier 20. In other embodiments, different numbers of planet shafts 34 and columns 25 like three, five, six, seven or eight might be fixed to the planet carrier 20.

In other embodiments of the invention, only the fixed side 36 of the planet bolts 34 is fixed to the first part 22 of the planet carrier 20 and the columns 25 are fixed to the second part 23 of the planet carrier 20 by a rigid connection.

In some embodiments of the invention, the available space in the planet carrier 20 is completely used by planet wheels 40, so there is no space left for placing columns 25 between the first part 22 and the second part 23 of the planet carrier 20. In this case, the two parts 22, 23 of the planet carrier 20 are only connected by the planet shafts 34.

Figure 4 shows the same embodiment of the invention as Figure 3 from a second side. In this view, planet shaft interfaces 38 fixed to the second part 23 of the planet carrier 20 are visible.

In the preferred embodiment of figure 3 and 4, the first part 22 of the planet carrier 22 is on the rotor side of the planet carrier 20, visible by the fact that the input shaft connection 21 is rigidly connected to the first part 22 of the planet carrier. At the same time, the second part 23 of the planet carrier 20 is on the generator side as a sun wheel 50 connected to a high-speed shaft 10 or an intermediate shaft will be received by a sun wheel opening 48 in the second part 23 of the planet carrier 20.

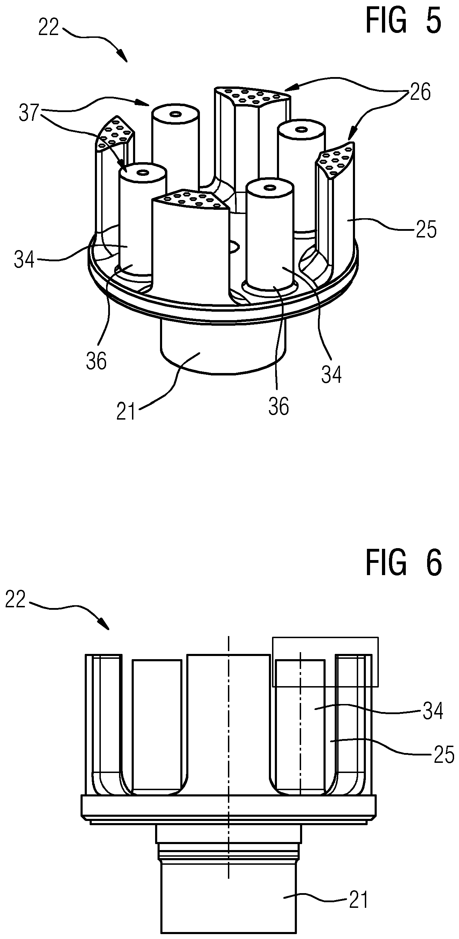

Figure 5 shows the first part 22 of the planet carrier 20 of the embodiment of figures 3 and 4. It shows that the free side 37 of the planet shafts 34 comprises a central hole for receiving shaft connection means 30, in particular bolts or rods.

Figure 5 further shows free column ends 26 comprising multiple holes for receiving column connection means, in particular bolts or rods.

In the shown embodiment, it is visible that the base shape of the free sides 37 of the planet shafts 34 is circular.

The base shape of the free column end 26 is mainly trapezoidal or a segment of a circle. The columns 25 are shaped mainly to fill any remaining space between the planet wheels.

In this preferred embodiment, the base shape of the planet shafts 34 and the base shape of the columns 25 is mainly constant over the length of the planet shafts 34 and the columns 25. This advantageously allows for a simplified mold for a casting or forging process.

Figure 6 shows a side view of the embodiment of Figure 5. It is shown in the rectangular frame on the right side of the figure that the length of the planet shaft 34 is slightly shorter than the length of the columns 25. This is particularly advantageously as it assures that a relatively stiff connection between the two parts 22, 23 of the planet carrier 20 is achieved via the columns 25 for transmitting the torsional loads from the first part 22 to the second part 23 of the planet carrier 20.

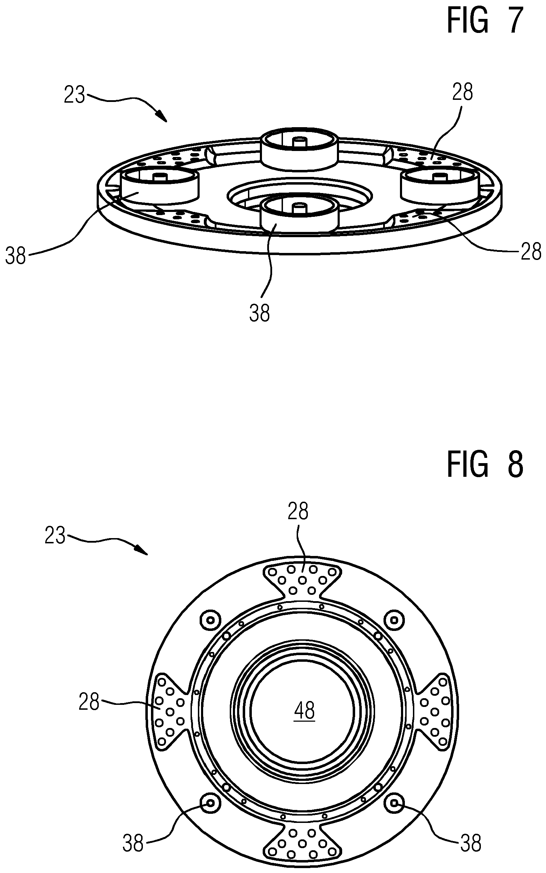

Figure 7 and 8 show views of the two sides of the second part 23 of the embodiment of figures 3 to 6.

Figure 7 shows the planet shaft interfaces 38 shaped as a ring to receive the circular free sides 37 of the planet shafts 34. The firm fixation of the free sides 37 of the planet shafts 34 in the planet shaft interfaces 38 ensures a perfect alignment of the planet shafts 34 and a firm support of the planet shafts 34 against bending or distortion due to the torsional loads on the planet carrier 20.

The connection of the free sides 37 of the planet shafts 34 can advantageously be a clamped connection or a press fit, allowing for a simplified design. A connection with bolts or rods as shown in the figures is preferred as it allows detaching the planet shaft 34 from the second part 23 of the planet carrier 20 in an easy way.

As Figure 8 shows the planet shaft interfaces 38 from the other side, a central hole fitting to the central hole in the free side 37 of the planet shafts 34 is visible. By these central holes, shaft connection means 30 will be received and the planet shafts 34 can be pretensioned due to their shorter lengths compared to the columns 25 (see Figure 6).

Figures 7 and 8 show in addition the hole pattern of the column interfaces 28 fitting to the bolt holes in the free column end 26 visible in Figure 5. These holes are receiving the column connection means.

The two planet carrier parts 22, 23 shown in Figures 5 to 8 can be connected in four positions, as a free side 37 of a planet shaft 34 must connect to a planet shaft interface 38.

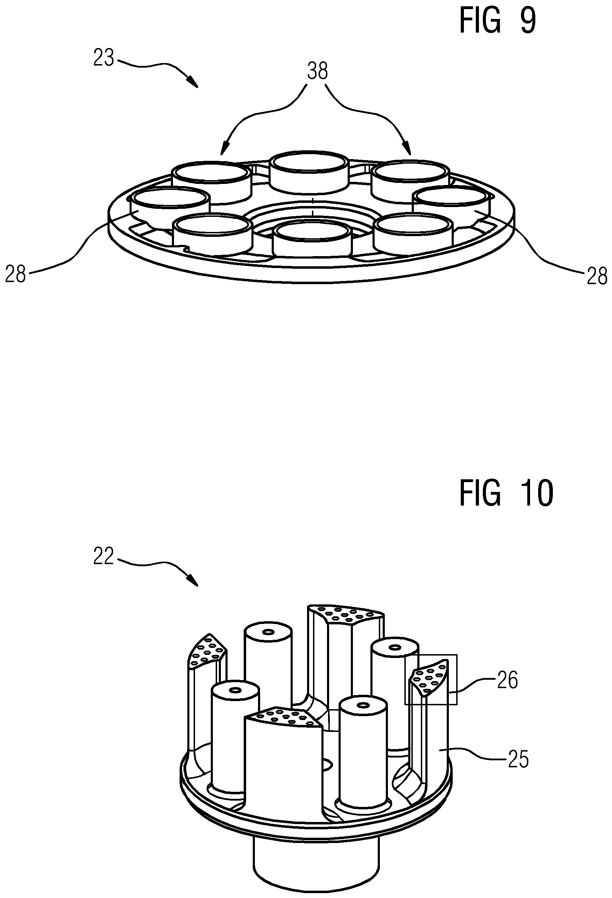

Figure 9 shows a view like Figure 7 on a different embodiment of a second part 23 of an inventive planet carrier 20. In this embodiment, the shaft interfaces 38 and the column interfaces 28 have the same base shape, in particular a circular base shape, leading advantageously to a simpler production process for the second part 23 of the planet carrier 20.

Figure 10 shows a first part 22 of the planet carrier. For fitting to the second part 23 shown in figure 9, the free column ends 26 need to be tooled in a corresponding circular shape identical to the free side 37 of the planet shafts 34. The area where such a tooling needs to be performed is marked with the frame on the right side of figure 10. As advantageously only the free column end 26 will be tooled, the bending stiffness of the columns 25 against torsional loads on the planet carrier 20 will remain mainly the same.

In a preferred embodiment all eight interfaces are provided with the same geometry, what means that additionally the hole pattern of the free column end 26 and the free sides 37 of the planet shafts 34 are identical. Advantageously, this results in great simplicity for mounting the second part of the planet carrier to the planet shafts and columns, as the parts are fitting together in all possible eight mounting positions.

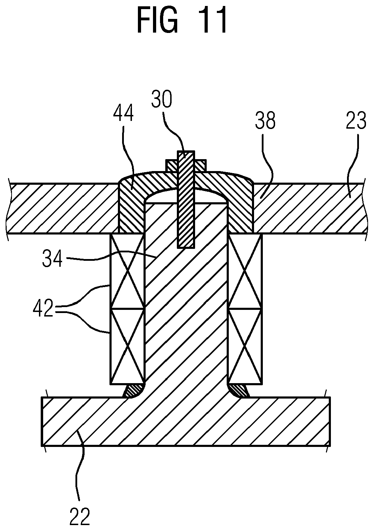

Figure 11 shows another preferred embodiment of the invention in a sectional view. In this figure, the planet carrier 20 is cut in the plane of the axis of the planet shaft 34. On the planet shaft 34, two planet bearings 42 are mounted. In an opening of the planet shaft interface 38 on the second part 23 of the planet carrier 20, bearing pretension means 44 are received. Shaft connection means 30, in particular a bolt or a rod, are fixed to the planet shaft 34. By tightening the bolt or tensioning the rod, the planet shaft 34 is connected to the second part 23 of the planet carrier 20. At the same time, a force in axial direction of the planet shaft 34 is applied on the bearing pretension means 44 and the latter is pressed against the planet bearing 42, such pretensioning both planet bearings 42 between the first part 22 of the planet carrier 20 and the bearing pretension means 44.

Preferably, the bearing pretension means 44 fit tightly into the opening in the planet shaft interface 38 for advantageously allowing only movements of the bearing pretension means 44 in axial direction relative to the planet shaft interface 38. This ensures that the planet shaft 34 has a load carrying connection to the second part 23 of the planet carrier 20 in terms of radial deformations, thus ensuring a good alignment of the planet wheels 40 when meshing with the hollow wheel 45 and the sun wheel 50.

### Reference list

- 1: Wind Turbine
- 2: Tower
- 3: Nacelle
- 4: Rotor
- 5: Rotor Blade
- 6: Rotor Shaft
- 7: Gearbox
- 8: Planet Stage
- 9: Generator
- 10: High-Speed Shaft
- 19: Input Shaft
- 20: Planet Carrier
- 21: Input Shaft Connection
- 22: First Part
- 23: Second Part
- 25: Column
- 26: Free Column End
- 28: Column Interface
- 30: Shaft Connection Means
- 34: Planet Shaft
- 36: Fixed Side
- 37: Free Side
- 38: Planet Shaft Interface
- 40: Planet Wheel
- 42: Planet Bearing
- 44: Bearing Pretension Means
- 45: Hollow Wheel
- 48: Sun Wheel Opening
- 50: Sun Wheel

## Claims

1. A wind turbine gearbox (7) for transmitting torque from a
rotor (4) to a generator (9) comprising a planet carrier (20)
at least three planet shafts (34) comprising a fixed side (36) and a free side (37),
at least three planet wheels (40) mounted on the planet shafts (34), and
a hollow wheel (45) of at least 1.8m in diameter, wherein the planet wheels (40) mesh with the hollow wheel (45),
wherein the planet carrier (20) comprises a first part (22) and a second part (23) connected to each other, wherein one of the two parts (22,23) is on the rotor side of the planet carrier (20) and the other part (22,23) is on the generator side of the planet carrier (20),
wherein the fixed side (36) of each planet shaft (34) is fixed to the first part (22) of the planet carrier (20) by a rigid connection.

2. The wind turbine gearbox (7) according to claim 1, wherein the rigid connection is a forged connection or a casted connection or a welded connection.

3. The wind turbine gearbox (7) according to one of the preceding claims, wherein the free side (37) of the planet shafts (34) is connected to the second part (23) of the planet carrier (20), so that the first part (22) and the second part (23) of the planet carrier (20) are connected by the planet shafts (34).

4. The wind turbine gearbox (7) according to claim 3, wherein the connection between the free side (37) of the planet shafts (34) and the second part (23) of the planet carrier (20) is a detachable connection, in particular a bolted connection, a clamped connection or a press fit.

5. The wind turbine gearbox (7) according to claim 3 or 4,
wherein the connection between the planet shafts (34) and the second part (23) of the planet carrier (20) comprises shaft connection means (30), in particular bolts and/or rods and/or
wherein the second part (23) of the planet carrier (20) comprises a planet shaft interface (38).

6. The wind turbine gearbox (7) according to claim 5, wherein the planet shaft interface (38) is configured to receive bearing pretension means (44).

7. The wind turbine gearbox (7) according to claim 3 to 6,
wherein the first part (22) and the second part (23) of the planet carrier (20) are connected by at least one column (25).

8. The wind turbine gearbox (7) according to claim 7, wherein the planet shafts (34) and the column (25) are fixed to the first part (22) of the planet carrier (20).

9. The wind turbine gearbox (7) according to claim 7 or 8,
wherein the connection between the column (25) and the second part (23) of the planet carrier (20) comprises column connection means, in particular bolts and/or rods and/or
wherein the second part (23) of the planet carrier (20) comprises at least one column interface (28).

10. The wind turbine gearbox (7) according to claim 9,
wherein the planet shaft interfaces (38) and the column interface (28) have the same base shape, in particular a circular base shape.

11. The wind turbine gearbox (7) according to one of the preceding claims, wherein the first part (22) of the planet carrier (20) is on the rotor side of the planet carrier (20) and/or the second part (23) of the planet carrier (20) is on the generator side of the planet carrier (20).

12. A wind turbine (1) comprising a gearbox (7) according to any of the preceding claims.

13. A method of mounting a wind turbine gearbox (7), in particular according to one of the preceding claims, comprising the steps of:
- providing a first part (22) of a planet carrier (20) comprising planet shafts (34) rigidly connected to the first part (22) of the planet carrier (20),
- mounting a planet wheel (40) on each planet shaft (34),
- connecting the first part (22) of the planet carrier (20) with a second part (23) of the planet carrier (20), and
- mounting the planet carrier (20) into a hollow wheel (45) of at least 1.8m in diameter so that the planet wheel (40) meshes with the hollow wheel (45) .

14. The method of mounting the wind turbine gearbox (7) according to claim 13, wherein the step of providing the first part (22) of the planet carrier (20) comprises
- casting the first part (22) of the planet carrier (20) and the planet shafts (34) in one piece,
- forging the first part of the planet carrier (20) and the planet shafts (34) in one piece, or
- welding the first part (22) of the planet carrier (20) and the planet shafts (34) together so that they form one piece.

15. A method of mounting a wind turbine gearbox (7) according to claim 13 or 14,
wherein the step mounting planet wheels (40) on the planet shafts (34) comprises mounting planet bearings (42) on the planet shaft (34) and
wherein the step connecting the first part (22) of the planet carrier (20) with the second part (23) of the planet carrier (20) includes mounting bearing pretension means (44) to pretense the planet bearings (42).
